# EUROPEAN PATENT APPLICATION

(11) **EP 1 798 643 A2**
(43) Date of publication of application: **20.06.2007**
(21) Application number: 06126012.1
(22) Date of filing: 13.12.2006
(51) Int. Cl.: G06F 17/00, G10H 1/00

(54) **Taste profile production apparatus, taste profile production method and profile production program**

(30) Priority: 14.12.2005 JP 2005361115
(71) Applicant: SONY CORPORATION, Tokyo (JP)
(72) Inventor: Hashizume, Atsushi, Shinagawa-ku Tokyo (JP); Mukaiyama, Ryo, Shinagawa-ku Tokyo (JP); Kimura, Takaomi, Shinagawa-ku Tokyo (JP); Zhao, Wenwu, Shinagawa-ku Tokyo (JP)
(74) Representative: Körber, Martin Hans

(57) **Abstract**

A taste profile production apparatus (1) includes: a storage section (15) configured to retain one or more music data; a music analysis section (2) configured to analyze the music data using a predetermined music analysis method to classify numerical value meta data, which are successive values for a plurality of items representative of characteristics of the music data, into a plurality of classes for the individual items; and a profile production section (3) configured to take statistics of the number of the music data for the individual classes for the individual items to produce a taste profile representing a taste unique to a user of the taste profile production apparatus with regard to the musical pieces.

## Description

### CROSS REFERENCES TO RELATED APPLICATIONS

The present invention contains subject matter related to Japanese Patent Application JP 2005-361115 filed with the Japanese Patent Office on December 14, 2005, the entire contents of which being incorporated herein by reference.

### BACKGROUND OF THE INVENTION

### 1. Field of the Invention

This invention relates to a taste profile production apparatus, a taste profile production method and a profile production program and can be applied suitably, for example, to a potable music player.

### 2. Description of the Related Art

In the past, a portable music player retains a plurality of music data in a semiconductor memory, a hard disk drive or a like memory device built therein such that a user can select and reproduce a desired one of the music data. Consequently, the portable music player allows the user to enjoy music readily at a desired place.

A tune recommendation system which utilizes a portable music player of the type described is known and disclosed, for example, in Japanese Patent Laid-open No. 2004-54023. According to the tune recommendation system, users each owing a portable music player of the type described can exchange their recommendation music lists therebetween to inform the other party of musical pieces which have become popular recently or to acquire reference information upon selection of a favorite musical piece.

### SUMMARY OF THE INVENTION

Incidentally, under present conditions, when users who own individual portable music players try to discriminate whether or not they have similar tastes to each other with regard to music through comparison between music data owned by the users, the comparison itself is difficult unless both of the users own music data of the same musical pieces or the same artists.

Actually, when users who own individual portable music players directly compare music data owned by them with each other, there is a problem that, if the number of musical pieces owned is great, then a long period of time may be required for transfer of the music data list and also the time necessary for the comparison generally increases in proportion to the number of musical pieces.

Therefore, it is demanded to provide a taste profile production apparatus, a taste profile production method and a profile program which can compare unique tastes of users regarding music data owned by the users simply in a short period of time to produce taste profiles for effective utilization of the music data.

According to an embodiment of the present invention, there is provided a taste profile production apparatus including: storage means configured to retain one or more music data; music analysis means configured to analyze the music data using a predetermined music analysis method to classify numerical value meta data, which are successive values for a plurality of items representative of characteristics of the music data, into a plurality of classes for the individual items; and profile production means configured to take statistics of the number of the music data for the individual classes for the individual items to produce a taste profile representing a taste unique to a user of the taste profile production apparatus with regard to the musical pieces.

According to another embodiment of the present invention, there is provided a taste profile production method including, or a profile production program for causing an information processing apparatus to execute the steps of: analyzing one or more music data retained in storage means using a predetermined music analysis method to classify numerical value meta data, which are successive values for a plurality of items representative of characteristics of the music data, into a plurality of classes for the individual items; and taking statistics of the number of the music data classified in the individual classes for the individual items to produce a taste profile representing a taste unique to a user with regard to the musical pieces.

In the taste profile production apparatus, taste profile production method and profile production program, one or more music data retained in the storage means are analyzed by a predetermined music analysis method to classify numerical value data of successive values of a plurality of items representative of characteristics of the music data into a plurality of classes for the individual items. For the individual items, statistics of the number of music data in the individual classes are taken to produce a taste profile representative of the taste unique to the user regarding the music data. Consequently, the taste degree unique to the user regarding the music data owned by the user can be produced as the taste profile which includes not abstract but concrete numerical values for the individual items.

Thus, in the taste profile production apparatus, taste profile production method and profile production program, the tastes unique to the user of the taste profile production apparatus and a user of another taste profile production apparatus with regard to music data owned by the users can be compared with each other to produce a taste profile to be utilized effectively simply in a short period of time.

### BRIEF DESCRIPTION OF THE DRAWINGS

FIG. 1 is a schematic block diagram showing a configuration of a portable music player to which the present invention is applied;
FIG. 2 is a flow chart illustrating a music analysis processing procedure;
FIG. 3 is a view illustrating music analysis data at a first stage of production of a taste profile;
FIG. 4 is a view illustrating a characteristic amount-bucket number conversion table;
FIG. 5 is a view illustrating music set data with meta data at a second stage of production of a taste profile;
FIG. 6 is a flow chart illustrating a profile production processing procedure;
FIG. 7 is a view illustrating bucket value conversion data at a third stage of production of a taste profile;
FIG. 8 is a view illustrating a final taste profile in a normalized form;
FIGS. 9A and 9B are views illustrating particular examples of a taste profile;
FIG. 10 is a flow chart illustrating an affinity degree calculation process;
FIG. 11 is a view illustrating an affinity degree calculation process in which a taste profile is utilized;
FIG. 12 is a schematic view showing an affinity degree calculation result screen;
FIG. 13 is a flow chart illustrating a sort processing procedure in which a score is used;
FIGS. 14A to 14C are views illustrating a score calculation method;
FIG. 15 is a flow chart illustrating a merge processing procedure;
FIG. 16 is a view illustrating a merging process in which taste profiles of user A and user B are utilized;

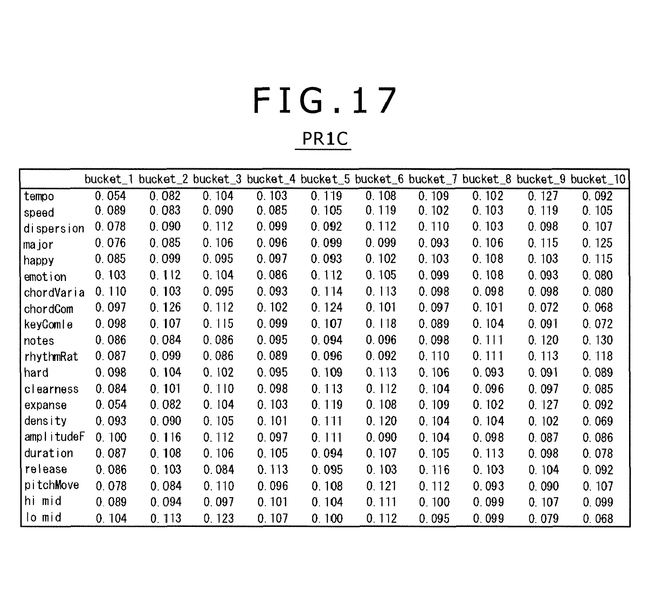

FIG. 17 is a view illustrating a new taste profile obtained by the merging process;
FIG. 18 is a block diagram showing a module configuration; and
FIG. 19 is a view illustrating another score calculation method.

### DETAILED DESCRIPTION OF THE PREFERRED EMBODIMENTS

### (1) Configuration of the Portable Music Player

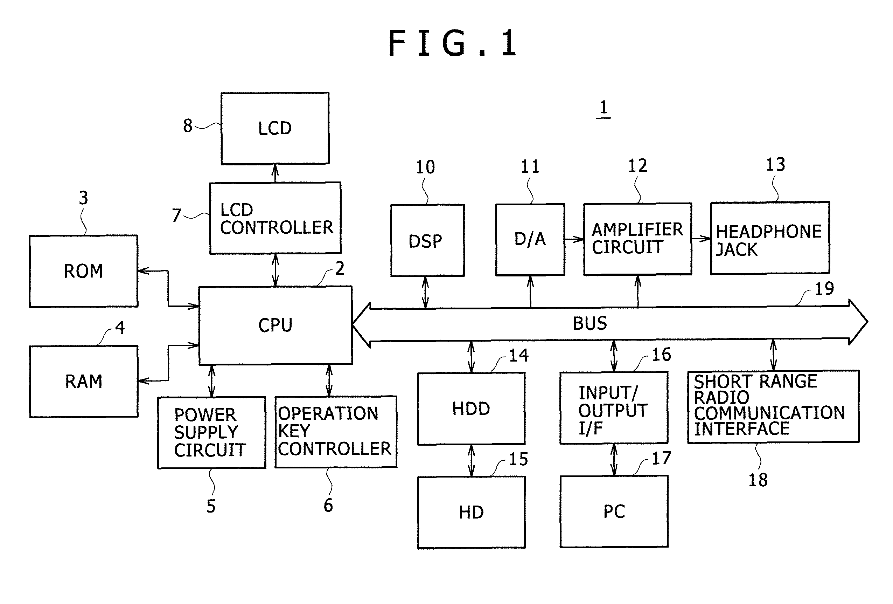

Referring first to FIG. 1, there is shown a portable music player in which a taste profile production function according to a preferred form of the present invention is incorporated. The portable music player 1 includes a power supply circuit 5 which converts a power supply voltage supplied thereto from a battery not shown into internal power of a predetermined voltage. The internal power is supplied to various components of the portable music player 1 including a central processing unit (CPU) 2 to drive the entire portable music player 1.

The CPU 2 of the portable music player 1 reads out a basic program or various application programs including a profile production program stored in a read only memory (ROM) 3 and develops the read out programs in a random access memory (RAM) 4. The CPU 2 thereby executes a recording process or a reproduction process of music data or executes a taste profile production process hereinafter described or the like.

In particular, if the CPU 2 recognizes that, for example, a musical piece a which a user desires to reproduce is designated from the user through an operation key controller 6, then the CPU 2 accesses a hard disk drive 14 through a bus 19 to read out music data of the musical piece a from a hard disk 15 and signals the read out music data to a digital signal processor (DSP) 10.

The CPU 2 of the portable music player 1 controls the DSP 10 to execute a reproduction process including decompression, decoding and so forth for the music data of the musical piece a and controls a digital to analog (D/A) conversion circuit 11 to convert reproduction data of the musical piece a obtained as result of the reproduction process into an analog reproduction signal. Then, the analog reproduction signal is supplied to an amplifier circuit 12 so that sound of the musical piece a is outputted from a headphone (not shown) through a headphone jack 13.

At this time, the CPU 2 of the portable music player 1 controls a liquid crystal display (LCD) controller 7 to cause an LCD unit 8 to display the title, artist name and reproduction elapsed time of the musical piece a being currently outputted and further display various kinds of information such as the battery remaining power.

Further, the CPU 2 of the portable music player 1 can transmit and receive music data and so forth to and from a personal computer 17 connected to an input/output interface 16. Consequently, the CPU 2 can store music data received from the personal computer 17 on the hard disk 15 through the hard disk drive 14.

Furthermore, the CPU 2 of the portable music player 1 has a short range radio communication interface 18 such as, for example, a Bluetooth module (registered trademark) interface, IEEE (Institute of Electrical and Electronics Engineers) 802.11g interface or an infrared interface. Consequently, the CPU 2 can transmit and receive a taste profile hereinafter described and music data to and from another portable music player 1 owned by another user B different from the user A who is an owner of the portable music player 1. It is to be noted that, while the portable music player 1 uses the short range radio communication interface 18, the communication apparatus is not limited to the short range radio communication interface 18, but various other communication apparatus such as a wired communication interface may be used.

According to the portable music player 1 having such a configuration as described above, if the profile production program which is one of application programs is rendered active, then a taste profile representative of the taste of the user A regarding music can be produced based on a plurality of music data from among a large number of music data stored on the hard disk 15. Now, a flow of operations until a taste profile is produced and a utilization method of the taste profile are described below.

### (2) Production Method of a Taste Profile

### (2-1) Music analysis processing procedure

In the portable music player 1, before a production process of a taste profile is entered, it is necessary to perform an analysis of numerical value meta data for a plurality of musical pieces stored on the hard disk 15 by the user A as a preceding process. The music analysis processing procedure is described first.

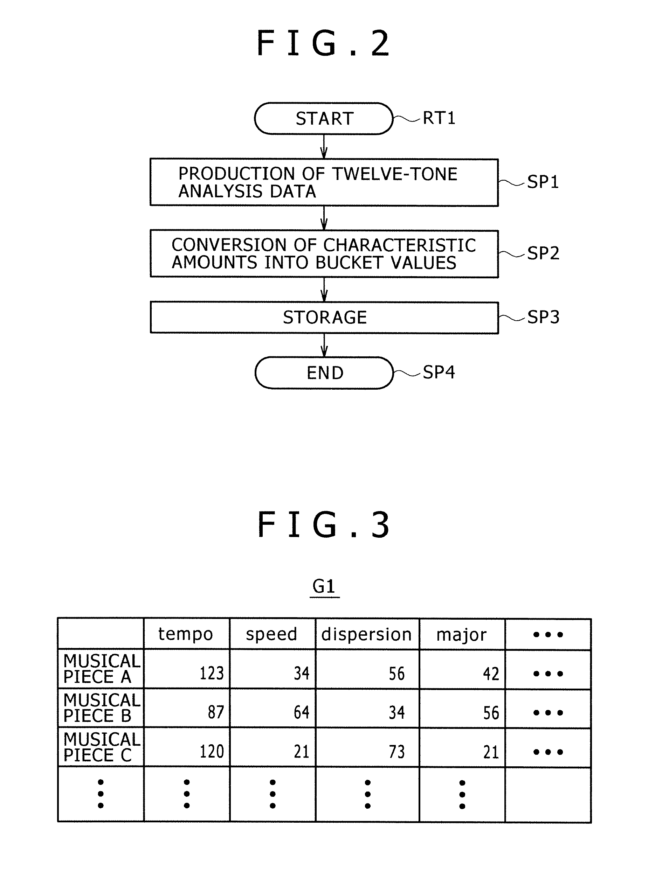

Referring to FIG. 2, at step SP1 after the CPU 2 of the portable music player 1 starts the routine RT1, it analyzes a plurality of music data stored on the hard disk 15 to calculate music analysis data formed from numerical value data which represent characteristics of the musical pieces for individual items such as "tempo", "speed", "dispersion", "major", ··· using a predetermined method. Thereafter, the processing advances to step SP2.

Incidentally, an example of a calculation method of musical analysis data is disclosed in detail in Japanese Patent Laid-open No. 2005-274708 filed by the assignee of the present invention in Japan. However, the calculation method is not limited to this, but music analysis data may be calculated by various methods.

Referring to FIG. 3, musical analysis data G1 is formed as numerical values. In particular, as regards the musical piece a, characteristics thereof are represented as numerical values of characteristic amounts as successive values individually for a plurality of items like "tempo: 123", "speed: 34", "dispersion: 56", "major: 42", ···. Similarly, also as regards the musical piece b, characteristics thereof are represented as numerical values of characteristic amounts as successive values individually for the items like "tempo: 87", "speed: 64", "dispersion: 34", "major: 56", ···. Further, as regards the musical piece c, characteristics thereof are represented as numerical values of characteristic amounts as successive values individually for the items like "tempo: 120", "speed: 21", "dispersion: 73", "major: 21",

The musical analysis data G1 may be required at a first stage in production of a taste file. Although the musical analysis data G1 may be analyzed by the CPU 2 of the portable music player 1, they may otherwise be analyzed by the personal computer 17 connected to the portable music player 1 through the input/output interface 16 such that the portable music player 1 may receive a result of the analysis from the personal computer 17.

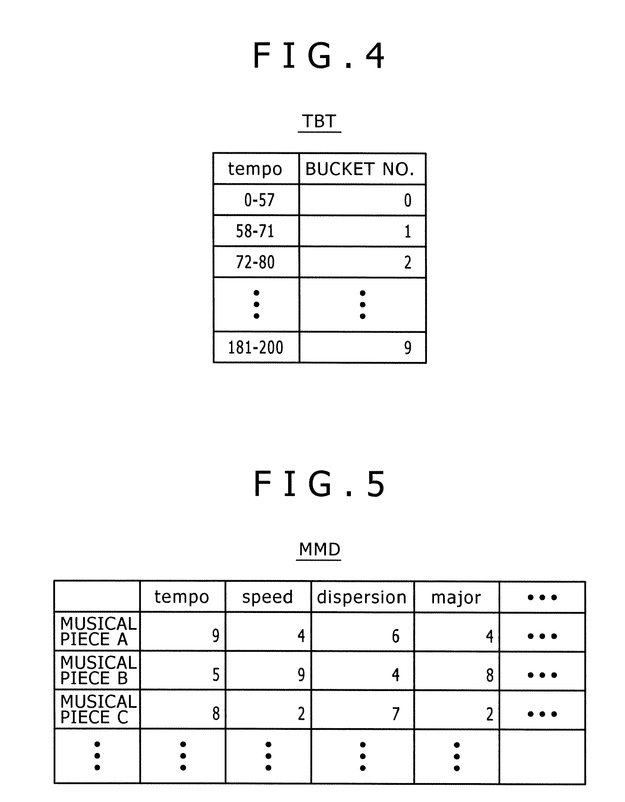

Referring back to FIG. 2, the CPU 2 of the portable music player 1 converts the characteristic amounts of the individual items into bucket values based on the musical analysis data G1 at step SP2, whereafter the processing advances to step SP3. The conversion of the characteristic amounts into bucket values is to classify the characteristic amounts into ten classes of different discrete values (bucket numbers) based on such a characteristic amount-bucket value conversion table TBT as shown in FIG. 4 which is retained in the portable music player 1 in advance. For example, as regards the item "tempo", the characteristic amounts are classified such that they correspond to a bucket number "0" where they range from 0 to 57; to another bucket number "1" where they range from 58 to 71; to a further bucket number "2" where they range from 72 to 80; ···; and to a different bucket number "9" where they range from 181 to 200. Incidentally, the CPU 2 of the portable music player 1 converts also all of the other items than the item "tempo" into discrete values (bucket numbers).

It is to be noted that the characteristic amount-bucket value conversion table TBT may otherwise be acquired by downloading from a server which provides a distribution service (EMD (Electronic Music Distribution) service) of music (musical pieces). However, in any case, if comparison with a taste profile of another user is taken into consideration, then the correspondence relationship between the individual packets and the ranges of characteristic amounts is preferably made common between the individual characteristic amount-bucket value conversion tables TBT.

Incidentally, the characteristic amount-bucket value conversion table TBT is produced by collecting a large number of musical pieces over a very wide variety of genres and calculating characteristic amounts of the musical pieces in numerical values by the technique described above. Thus, in the characteristic amount-bucket value conversion table TBT, the buckets and the characteristic amounts are coordinated with each other such that the musical pieces of an object of analysis are classified equally in number.

In particular, where the number of musical pieces of an object of analysis is N and the number of buckets to be produced is M, the N musical pieces are first sorted with numerical value meta data. Then, an intermediate value between the numerical value meta data of the N/Mth musical piece and the ((N/M)+1)th musical piece in the ascending order or descending order of the value is determined as the first or last bucket delimiter. Further, this process is successively repeated to produce N-1 bucket delimiters.

If the bucket values are classified otherwise merely at equal intervals, then there is the possibility that the taste profiles of various users may be similar to each other. However, if such a classification method as described above is used, then a range in which numerical values are concentrated is classified comparatively finely. Consequently, each taste profile produced using the classification method reflects characteristics of the pertaining user.

At step SP3, the CPU 2 of the portable music player 1 can produce, by converting the characteristic amounts of the musical analysis data G1 into bucket values, music set data MMD with meta data wherein bucket numbers are applied to individual musical pieces (musical piece a, musical piece b, musical piece c, ···) for the individual items. The music set data MMD with meta data are stored on the hard disk 15, and then the processing advances to step SP4, at which the processing is ended.

### (2-2) Profile production processing procedure

Now, a profile production processing procedure for producing a final taste profile which is executed next to the music analysis processing procedure RT1 by the portable music player 1 is described.

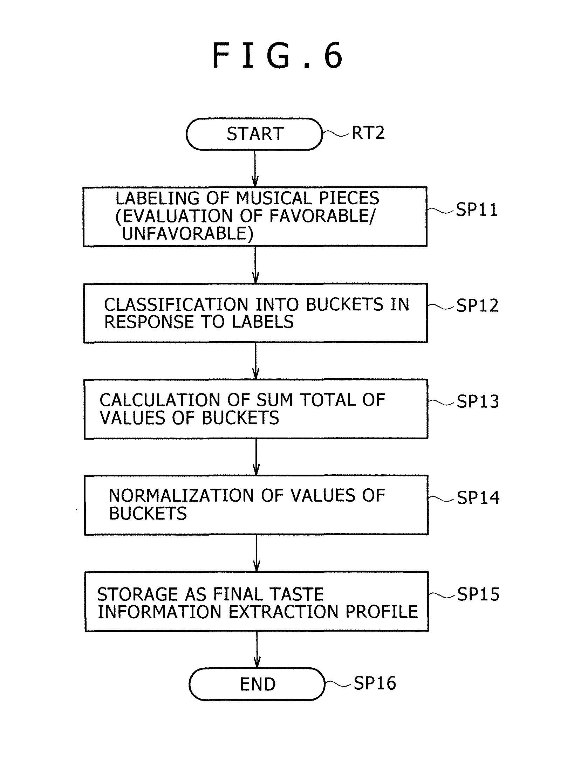

Referring to FIG. 6, at step SP11 after the routine RT2 is started, the CPU 2 of the portable music player 1 applies a label to musical pieces which are "favorable" to the user and applies another label to musical pieces which are "unfavorable" to the user from among the music set data MMD with meta data (FIG. 5). Thereafter, the processing advances to step SP12.

Here, the application of a label is to apply a flag representing "favorable" or "unfavorable" to each of music data in response to an explicit setting operation by a user. However, it is possible to apply a flag not necessarily in response to an explicit setting operation but considering that a musical piece which has been reproduced by a number of times greater than a predetermined value is "favorable" to the user but another musical piece which has been reproduced by a number of times equal to or smaller than the predetermined value is "unfavorable" to the user.

Or, as the method of applying a label, it is possible to make use of an operation history of the player itself to consider that a musical piece which has been skipped frequently through operations by the player or make use of rating to make a decision between "favorable" and "unfavorable" to apply a flag.

At step SP12, the CPU 2 of the portable music player 1 successively places music set data MMD with meta data to each of which a flag is applied at step SP11 into the buckets of the music data. At this time, each of the music set data MMD with meta data is placed into a bucket after "+1" is added if the flag of the label applied at step SP11 represents "favorable", but "-1" is added if the flag represents "unfavorable", to the number of musical pieces corresponding to the bucket number.

Incidentally, the CPU 2 of the portable music player 1 not only adds "+1" if the flag represents "favorable" and adds "-1" if the flag represents "unfavorable", to the value of the musical pieces corresponding to each bucket number, but also can simultaneously adjust the number of musical pieces corresponding to a bucket number adjacent the bucket.

At step SP13, the CPU 2 of the portable music player 1 calculates the sum total of the numerical value data placed in the buckets. Thereafter, the processing advances to step SP14.

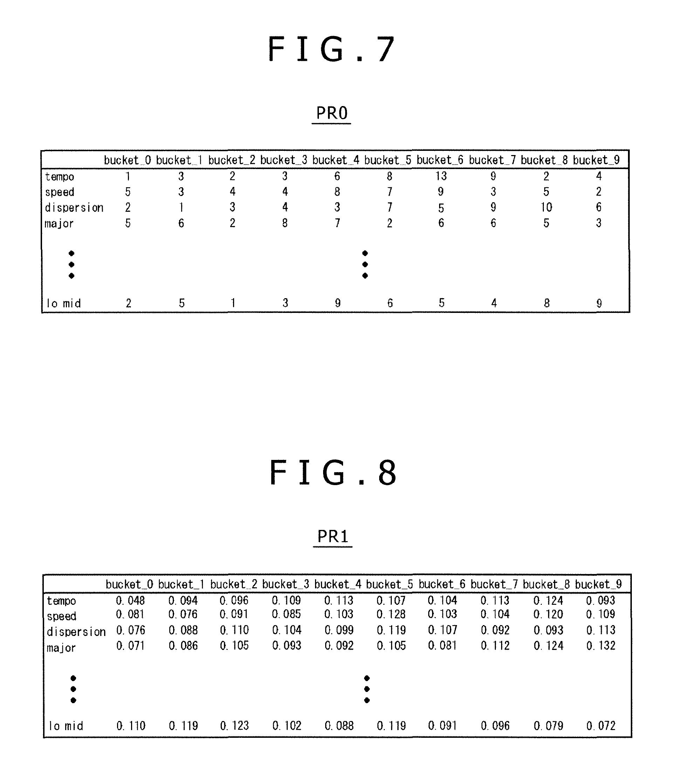

Such a taste profile PR0 as seen in FIG. 7 is produced by the processes up to step SP13 described above. The taste profile PR0 represents the taste of the user with regard to music. In the example of FIG. 7, the taste regarding the "tempo" is maximum with the class of the bucket 6. Therefore, it can be estimated that the user having this taste profile prefers, regarding the tempo, music having a characteristic amount corresponding to the bucket 6.

Each of the numerical values in the taste profile PR0 represents the number of musical pieces corresponding to the bucket number allocated to each of the items of "temp", "speed", "dispersion", "major", ···. Generally, since it is considered that any musical piece retained in the portable music player 1 coincides to some degree with the taste of the user, even if music data is not labeled, it can be regarded that the taste profile PR0 produced reflects the taste of the user regarding the music.

However, when a numerical value is placed into each bucket at step SP12, if adjustment is performed in response to the flag of the label applied at step SP11, the taste profile PR0 on which the taste of the user is further reflected is produced.

As hereinafter described, where the taste profile of the user is to be compared with that of a different user or in a like case, preferably the data in the taste profiles PR0 are in a normalized form. Therefore, at step SP14, the CPU 2 of the portable music player 1 normalizes the values of the buckets of the taste profile PR0 produced at step SP13. Thereafter, the processing advances to step SP15.

At step SP15, the CPU 2 of the portable music player 1 stores such a final taste profile PR1 as seen in FIG. 8 produced by the normalization at step SP14 on the hard disk 15. Thereafter, the processing advances to step SP16, at which the profile production processing procedure is ended.

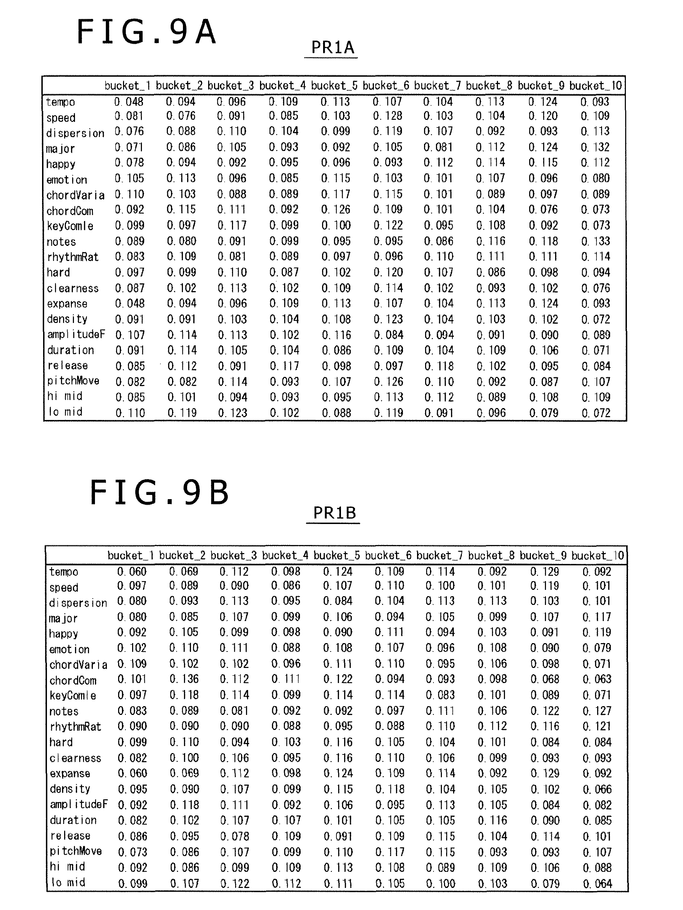

The taste profile PR1 produced in accordance with the profile production processing procedure described above is described in more detail. Since, for example, musical pieces owned by the user A and the user B are different in type and number from each other, different taste profiles PR1A and PR1B are produced as seen in FIGS. 9A and 9B, respectively.

The taste profiles PR1A and PR1B include a large number of items individually representative of characteristic amounts of musical pieces. In the following, the items are described roughly. "Tempo" represents the number of quarter notes per one minute, that is, the BPM (Beat Per Minutes). "Speed" represents whether the musical piece provides a high speed feeling or a low speed feeling to the user, and has an increasing value as the musical piece provides a higher speed feeling but has a decreasing value as the musical piece provides a lower speed feeling.

"Dispersion (tempo dispersion)" represents the magnitude of the fluctuation of the tempo and has an increasing value as the magnitude of the variation of the tempo increases but has a decreasing value as the tempo approaches a fixed tempo. "Major (rate of major chords)" represents the magnitude of the ratio of appearance of major chords and has an increasing value as the ratio of appearance of major chords increases but has a decreasing value as the ratio of appearance of minor chords increases.

"Happy (lightness)" represents the lightness of impression of the musical piece and has an increasing value as the musical piece provides a lighter impression but has a decreasing value as the music provides a more melancholic impression. "Emotion" represents whether or not the musical piece is emotional and has an increasing value as the musical piece provides a more emotional feeling to the user but has a decreasing value as the musical piece provides a less emotional feeing. "Chord variation (variation in chord progression)" represents the amount of variations in chord progression and has an increasing value as the number of types of different chord progressions used in the musical piece increases but has a decreasing value as the number of repetitions of the same chord progression or progressions increases in the musical piece.

"Chord complexity (difficulty in chord decision)" represents the difficulty in chord decision and has an increasing value as the ratio of four-voice chords increases or as the difficulty in decision of chords increases but has a decreasing value as the ratio of triads increases or as the difficulty in decision of chords decreases. "Key complexity (difficultly in decision of the key)" represents the difficulty in decision of the key and has an increasing value as the difficulty in decision of the scale of the musical piece increases but has a decreasing value as the degree of presence of definite scales increases.

"Note (amount of notes)" represents the number of notes and has an increasing value as the number of notes in the entire musical piece increases as in an ensemble of several tens of musical instruments but has a decreasing value as the number of notes in the entire musical piece decreases as in a solo play. "Rhythm ratio (ratio of rhythm musical instruments)" indicates the ratio of rhythm instruments and has an increasing value as the number of sounds which do not have a note such as sounds of percussion instruments increases but has other decreasing value as the number of sounds which have a note increases.

"Duration (length of tone)" represents the length of a tone and has an increasing value as the frequency in which the same note continues increases but has a decreasing value as the frequency in which the same not continues decreases. "Release (gentleness of attenuation of a tone)" represents the gentleness of attenuation of a tone and has an increasing value as the number of sounds whose volume attenuates gently after generation of sound increases but has a decreasing value as the number of sounds whose volume attenuates soon decreases.

"Hard (swiftness of sound generation)" represents the swiftness of sound generation and has an increasing value as the number of portions at which the time (attack time) before the sound volume upon sound generation increases is short increases but has a decreasing value as the number of portions at which the attack time is long increases. "Clearness (clearness of tone)" represents the degree by which harmonic tones of a tone appear clearly ≒ audibility and has an increasing value as the number of tones whose harmonics sound clearly increases but has a decreasing value as the number of tones whose harmonics sound clearly decreases.

"Expanse (magnitude of expanse of stereo sound)" represents the magnitude of expanse of stereo sound and has an increasing value as the difference in signal level between the left and right channels increases but has a decreasing value as the difference in signal level between the left and right channels decreases. "Density (density of sounds)" represents the filled up degree of frequencies and has an increasing value as the number of frequencies used in the musical piece as a result of generation of various sounds increases but has a decreasing value as the bandwidth in which no signal of the musical piece increases.

"Amplitude range (magnitude of variation of sound volume)" represents the magnitude of the sound volume variation in the musical piece and has an increasing value as the variation in sound volume increases but has a decreasing value as the variation in sound volume decreases. "Hi mid (intensity of sound in high frequency region" represents the intensity of sound in a high frequency region when compared with that in an intermediate frequency region and has an increasing value as the sound volume in a high frequency region increases but has a decreasing value as the sound volume in a high frequency region decreases. "Lo mid (intensity of sound in low frequency region" represents the intensity of sound in a low frequency region when compared with that in an intermediate frequency region and has an increasing value as the sound volume in a low frequency region increases but has a decreasing value as the sound volume in a low frequency region decreases.

In such taste profiles PR1A and PR1B as described above, the tastes with regard to a plurality of musical pieces owned by the user A and the user B are represented as numerical values individually for the fine items, respectively. Thus, the taste profiles PR1A and PR1B are very significant profiles on which all characteristics of the musical pieces are reflected irrespective of the genre, title, artist name and so forth.

Various forms of utilization of such taste profiles PR1A and PR1B as described above are described below.

### (3) Modes of Utilization of the Taste Profiles

### (3-1) Affinity degree calculation processing procedure

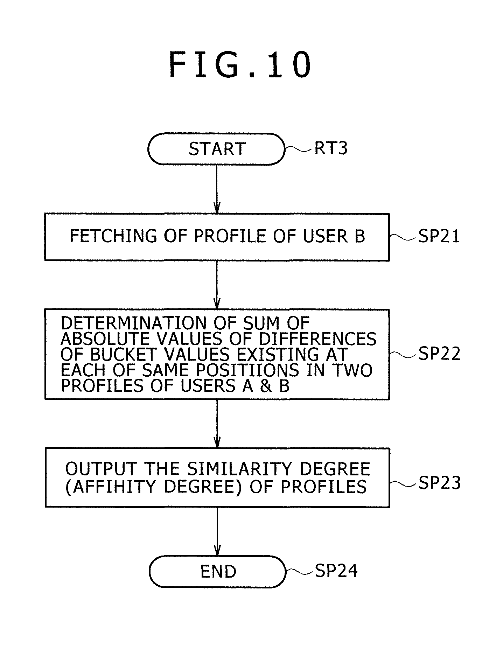

A utilization form wherein the user A who owns a portable music player 1 fetches the taste profile PR1B from the user B who owns another portable music player 1 and determines the affinity degree in taste regarding the music between the user A and the user B based on the taste profile PR1A of the user A and the taste profile PR1B of the user B is described with reference to a flow chart of FIG. 10.

At step SP21 after the routine RT3 is started, the CPU 2 of the portable music player 1 fetches the taste profile PR1B (FIG. 9B) from the portable music player 1 of the user B through the short range radio communication interface 18. Then, the processing advances to step SP22.

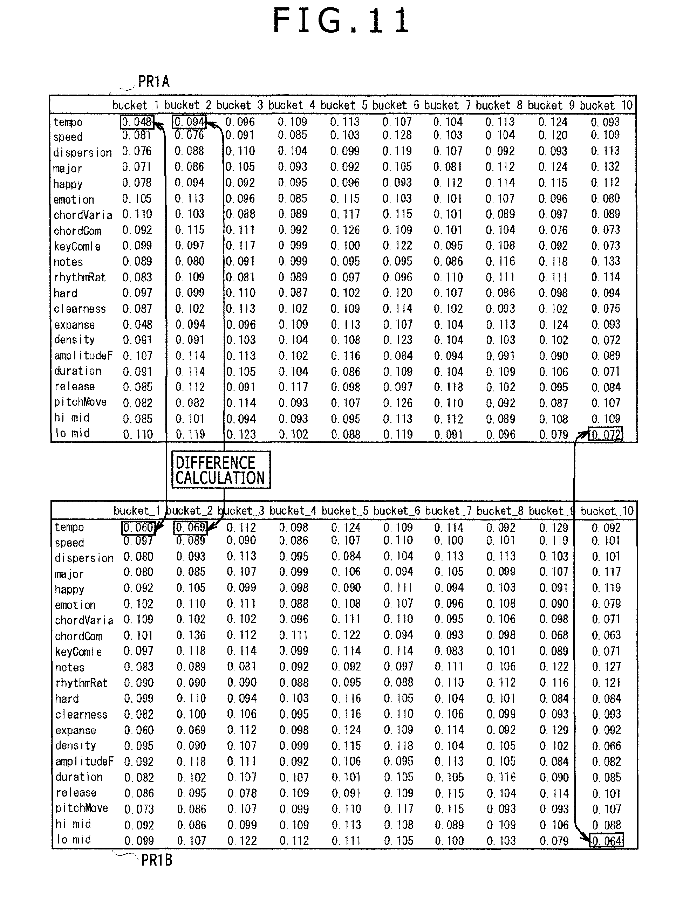

At step SP22, the CPU 2 of the portable music player 1 compares the taste profile PR1A of the user A and the taste profile PR1B of the user B with each other as seen in FIG. 11 to determine absolute values of differences between the bucket values indicated at the same positions. Then, the CPU 2 of the portable music player 1 calculates the sum total of the absolute values. Thereafter, the processing advances to step SP23.

In particular, the CPU 2 calculates the sum total of the difference 0.012 between the bucket value 0.048 of the bucket 1 of "tempo" of the taste profile PR1A of the user A and the bucket value 0.060 of the bucket 1 of "tempo" of the taste profile PR1B of the user B, the difference 0.025 between the bucket value 0.094 of the bucket 2 of "tempo" of the taste profile PR1A of the user A and the bucket value 0.069 of the bucket 2 of "tempo" of the taste profile PR1B of the user B, ···, and the difference 0.008 between the bucket value 0.072 of the bucket 10 of "lo mid" of the taste profile PR1A of the user A and the bucket value 0.064 of the bucket 10 of "lo mid" of the taste profile PR1B of the user B.

At step SP23, the CPU 2 of the portable music player 1 determines the similarity degree of the music taste of the user A and the music taste of the user B, that is, the affinity degree, based on the sum total calculated at step SP22, and outputs the affinity degree on a display screen. Thereafter, the processing advances to step SP24, at which the affinity degree calculation process is ended.

Here in the affinity degree calculation processing procedure RT3, the sum total represents that, as the value thereof decreases, the similarity degree between the music taste of the user A and the music taste of the user B increases, but as the value thereof increases, the similarity degree between the music taste of the user A and the music taste of the user B decreases.

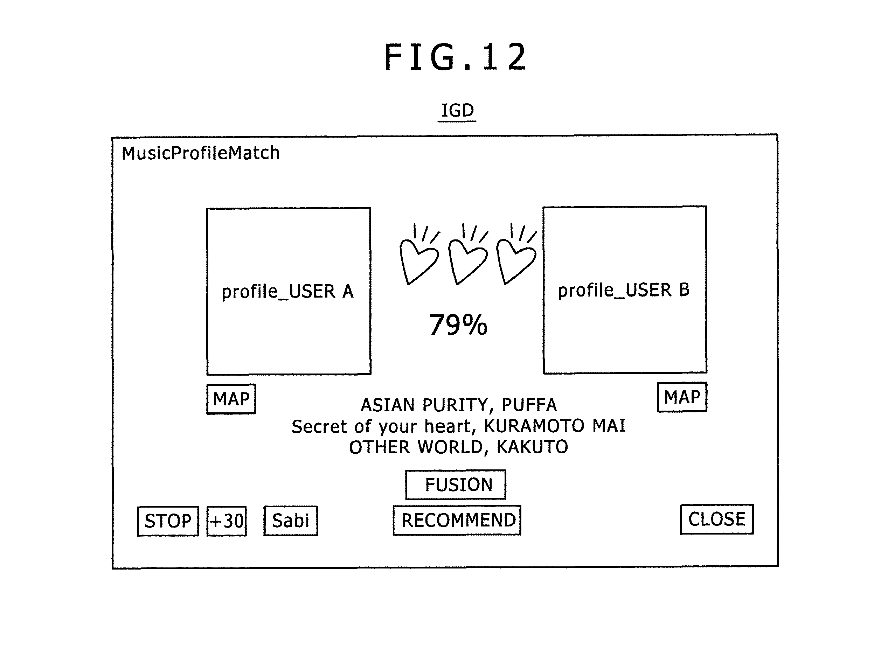

Accordingly, the CPU 2 of the portable music player 1 displays the affinity degree (represented in %) based on the sum total calculated in the affinity degree calculation processing procedure RT3 as an affinity degree calculation result screen IGD on the LCD unit 8 (FIG. 1) as shown in FIG. 12.

On the affinity degree calculation result screen IGD, it is indicated that the affinity degree between the music taste of the user A and the music taste of the user B is "79%". Further, the title and the artist name of each of musical pieces owned commonly by the user A and the user B are indicated. Consequently, the user who visually confirms the affinity degree calculation result screen IGD can intuitively recognize whether or not the music taste thereof is near to the music taste of the user B from the numerical value and the title and the artist name of the musical pieces indicated.

In particular, when the value of the % indication representative of the affinity degree is high and the title and the artist name of a musical piece are presented, the user can recognize that the music tastes are similar to each other and the same musical piece is owned. On the other hand, when the value of the % indication representative of the affinity degree is high but no title nor artist name of any musical piece is presented, the user can recognize that, although the same musical piece is not owned commonly, the music tastes are very similar to each other.

In the foregoing description, the affinity degree calculation processing procedure RT3 is executed by fetching the taste profile PR1B from the opposite party while the portable music player 1 of the user A and the portable music player 1 of the user B are in an ad hoc connection state. However, the manner of execution of the affinity degree calculation processing procedure RT3 is not limited to this. For example, it is possible to execute the affinity degree calculation processing procedure RT3 by connecting the portable music player 1 of the user A to the personal computer 17 through the input/output interface 16 and fetching the taste profile PR1 of the opposite party from the personal computer 17 to execute the affinity degree calculation processing procedure RT3. Further, such a utilization form as an application like "music affinity fortunetelling".

### (3-2) Sort processing procedure using a score

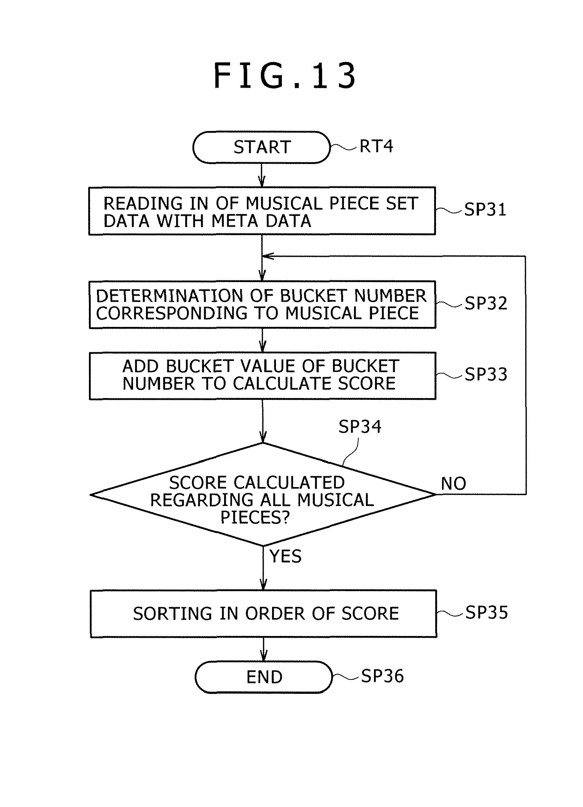

The user A of the portable music player 1 may want to enjoy favorite musical pieces in order from among a plurality of musical pieces stored on the hard disk 15. In this instance, a score is calculated in a unit of a musical piece from the taste profile PR1, and the musical pieces of the hard disk 15 are sorted based on the scores such that they are reproduced in order beginning with a musical piece which is decided as most favorite to the user A. Such a utilization form as just described is described with reference to a flow chart of FIG. 13.

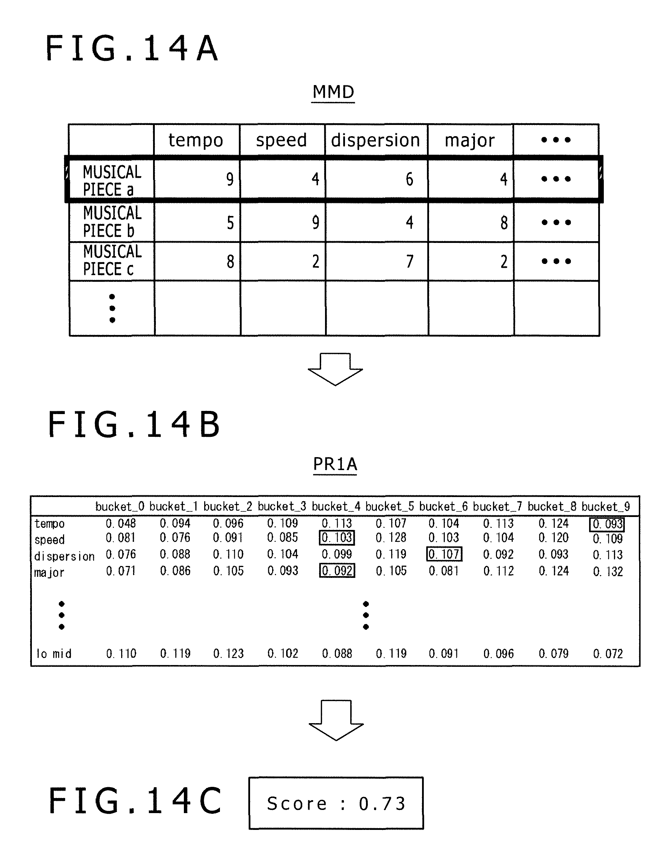

At step SP31 after the routine RT4 is started, the CPU 2 of the portable music player 1 reads in music set data MMD with meta data stored on the hard disk 15 as seen in FIG. 14A. Then, the processing advances to step SP32.

At step SP32, the CPU 2 of the portable music player 1 determines the bucket number corresponding, for example, to the musical piece a with regard to which the user wants to calculate a score from within the music set data MMD with meta data for the individual items (the bucket number in this instance is "tempo: 9", "speed: 4", "dispersion: 6", "major: 4", ···). Thereafter, the processing advances to step SP33.

At step SP33, the CPU 2 of the portable music player 1 adds the bucket values (0.093, 0.103, 0.107, 0.092, ···) coordinated with the bucket numbers of the items regarding the musical piece a and calculates the sum (in this instance, 0.73) as a score regarding the musical piece a as seen in FIGS. 14B and 14C. Thereafter, the processing advances to step SP34.

At step SP34, the CPU 2 of the portable music player 1 decides whether or not a score is calculated also with regard to the musical piece b, musical piece c, ··· following the musical piece a. If a negative result is obtained, then the CPU 2 of the portable music player 1 repeats the process at steps SP32 and the subsequent steps described above. Then, if an affirmative result is obtained, then the processing advances to step SP35.

Since calculation of a score is completed for all of the musical piece a, musical piece b, musical piece c, ··· in this manner, the CPU 2 of the portable music player 1 sorts, at step SP35, the musical piece a, musical piece b, musical piece c, ··· in the order of the favorableness to the user A to be reproduced. Thereafter, the processing advances to step SP36, at which the sort processing procedure is ended.

In short, the CPU 2 of the portable music player 1 can calculate, based on the bucket values normalized for the individual items of the taste profile PR1A, the score for each of a plurality of music data stored in the hard disk 15 by the user A. Consequently, if the music data are sorted in the descending order of the score, then the music data can be re-arranged in order of the favorableness to the user A. On the other hand, if the music data are sorted in the ascending order of the score, then the music data can be re-arranged in order of the non-favorableness to the user A.

However, since the score is not an absolute value but a relative value, it may not be decided from the values of the score whether the musical piece a is the most favorable piece to the user A. In other words, this may not be decided if the value of the score is not compared with the values of the score of the other musical pieces b, c, ···.

Incidentally, the CPU 2 of the portable music player 1 can apply the sorting processing procedure RT4 described above to such a utilization form that the musical pieces of a play list which the user A desires to reproduce are re-arranged so that they are reproduced in a desired order.

Further, the CPU 2 of the portable music player 1 can apply the sorting processing procedure RT4 described above to such a utilization form that, based on the taste profile PR1B fetched from the portable music player 1 of the user B, candidates for a musical piece which are likely to be favorable to the user A are listed from among the music data owned by the user B.

### (3-3) Merging processing procedure

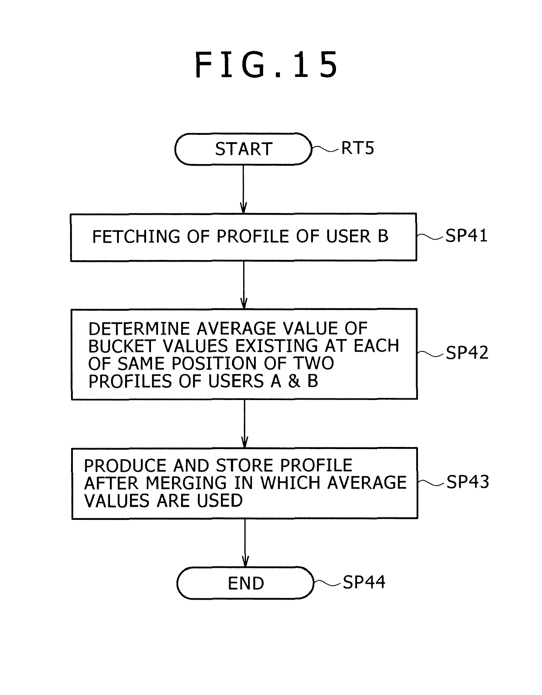

Also the following utilization form is available. In particular, the user A who owns a portable music player 1 fetches the taste profile PR1B from the user B who owns another portable music player 1, and the taste profile PR1A of the user A and the taste profile PR1B of the user B are merged to newly produce a taste profile common to the user A and the user B. Then, the thus produced taste profile is used to sort the musical pieces in the descending order of the favorableness to both of the user A and the user B. The utilization form just described is described more particularly with reference to a flow chart of FIG. 15.

At step SP41 after the routine RT5 is started, the CPU 2 of the portable music player 1 fetches the taste profile PR1B from the portable music player 1 of the user B through the short range radio communication interface 18. Thereafter, the processing advances to step SP42.

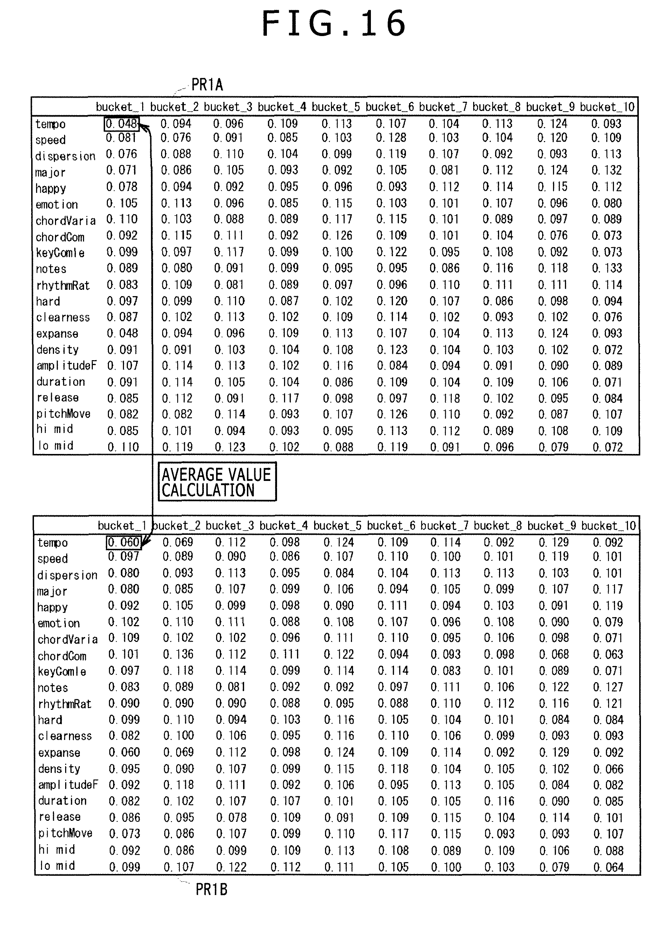

At step SP42, the CPU 2 of the portable music player 1 determines average values of bucket values individually existing at the same positions of the taste profile PR1A of the user A and the taste profile PR1B of the user B as seen in FIG. 16. Thereafter, the processing advances to step SP43.

At step SP43, the CPU 2 of the portable music player 1 uses the average values determined at step SP43 as new bucket values to produce a merged taste profile PR1C in which the average values are used, and stores the taste profile PR1C on the hard disk 15. Thereafter, the processing advances to step SP44, at which the merging processing procedure is ended.

Consequently, the CPU 2 of the portable music player 1 can apply the new taste profile PR1C obtained as a result of merging of the taste profile PR1A based on the music data owned by the user A and the taste profile PR1B based on the music data owned by the user B to such a filtering-like utilization form that, by calculating the score described hereinabove in a unit of music data, the music data can be sorted in the descending order of likely favorableness to both of the user A and the user B from among the music data owned by the user A and the music data owned by the user B.

### (4) Operation and Effects

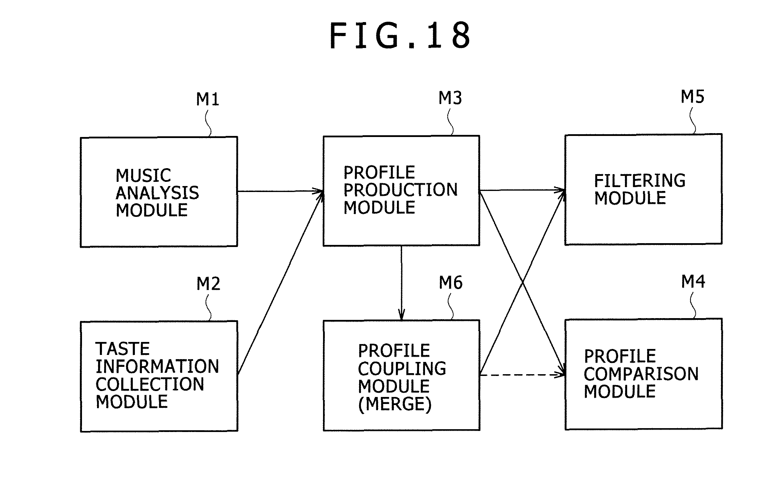

In the portable music player 1 having the configuration described above, the CPU 2 includes a combination of several modules based on the profile production program as seen in FIG. 18. In particular, referring to FIG. 18, the CPU 2 includes a music analysis module M1, a taste information collection module M2, a profile production module M3, a profile comparison module M4, a filtering module M5 and a profile coupling module M6.

More particularly, the CPU 2 of the portable music player 1 executes the music analysis processing procedure RT1 (FIG. 2) by means of the music analysis module M1 and applies flags produced when the user A labels "favorable" musical pieces and "unfavorable" music pieces to the music data by means of the taste information collection module M2. Then, the CPU 2 of the portable music player 1 executes the information collection module RT2 (FIG. 6) described hereinabove by means of the profile production module M3.

Then, the CPU 2 of the portable music player 1 compares the taste profile PR1A of the user A produced by the profile production module M3 with the taste profile PR1B of the user B fetched from the portable music player 1 by means of the profile comparison module M4 and calculates the differences of the bucket values at the positions defined by the various items and the bucket numbers. Then, the CPU 2 of the portable music player 1 calculates the affinity degree based on the sum total of the absolute values of the differences.

Accordingly, the CPU 2 of the portable music player 1 can compare characteristic amounts, for individual items of music data divided more finely than those of a taste comparison method in the past, which compares music data in terms of the genre, musical piece title and artist name, with each other as numerical values and calculate the similarity degree (affinity degree) between characteristic amounts determined from music data owned by the user A and characteristic amounts determined from music data owned by the user B as a definite numerical value (% indication). Therefore, a refined and highly accurate affinity degree can be presented to the user irrespective of the genre or the artist.

Further, the CPU 2 of the portable music player 1 simply fetches the taste profile PR1B from the portable music player 1 of the user B and calculates the sum total of the absolute value sums of the differences between the characteristic amounts of the taste profiles PR1A and PR1B. Therefore, the affinity degree can be determined simply and in a short period of time without the necessity to receive a music data list transferred from the opposite party terminal or to spend a long period of time for comparison.

Further, by using the taste profile PR1A to calculate a score for each of the music data or by using the new taste profile PR1C which is a result of merging of the taste profile PR1A of the user A and the taste profile PR1B of the user B to calculate a score for each music data, the CPU 2 of the portable music player 1 can sort the music data readily using the values of the score. Therefore, such filtering-like use that the tune data are re-arranged in the order of the likely favorableness to the user A or the user B can be performed based on the values of the score.

In this manner, according to the portable music player 1 to which the present invention is applied, since the taste profiles PR1A and PR1B are numerical value data, they can be utilized as more significant information. Consequently, increase in function can be anticipated and the convenience in use of a user can be enhanced significantly.

With the portable music player 1 having the configuration described above, since the CPU 2 produces the taste profile PR1 which represents characteristic amounts of music data for individual items as numerical values, the taste determined from the entire music data owned by the user A can be provided as a particular numerical value. Consequently, the portable music player 1 can be applied to various utilization forms.

### (5) Other Embodiments

It is to be noted that, in the embodiment described above, the taste profile production function is applied to a potable music player. However, according to the present invention, the application of the taste profile production function is not limited to this, but can be applied also to a portable telephone set, a PDA (Personal Digital Assistant) or a personal computer with a music reproduction function.

Further, while, in the embodiment described above, the taste profile production function is incorporated in the portable music player 1 such that the portable music player 1 itself produces a taste profile PR1, according to the present invention, the incorporation of the taste profile production function is not limited to this. In particular, it is possible to incorporate the taste profile production function in a personal computer connected to a portable music player such that the taste profile PR1 is produced by the personal computer and the portable music player 1 receives the produced taste profile PR1 from the personal computer.

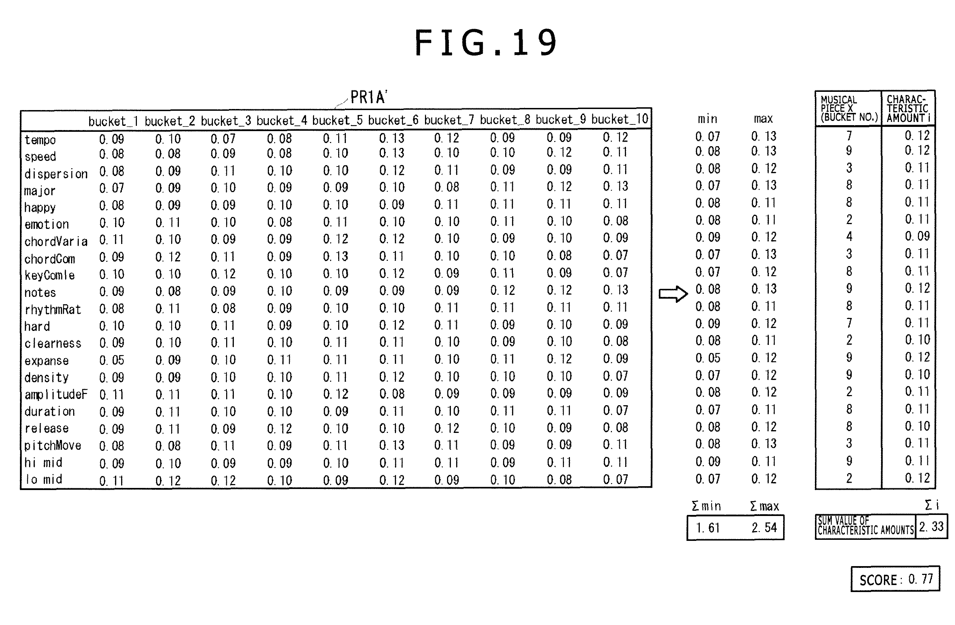

Further, while, in the embodiment described above, for example, bucket values coordinated with bucket numbers of various items regarding the music data a are successively added and the sum value is calculated as a score which is a relative value regarding the music data a. However, according to the present invention, the calculation method of a score is not limited to this, but a score may be calculated in the following manner. In particular, where the taste profile of the user A is, for example, such a taste profile PR1A' as shown in FIG. 19, a sum value Σₘᵢₙ(1, 61) of minimum values of characteristic amounts and a sum value Σₘₐₓ(2, 54) of maximum values of the characteristic amounts of the individual items are determined. Further, a sum value Σᵢ(2, 33) of the characteristic amounts i coincident with the bucket numbers of the musical piece X is determined. Thereafter, a score (0, 77) of an absolute value may be determined in accordance with the expression Score = (Σᵢ - Σₘᵢₙ)/(Σₘₐₓ - Σₘᵢₙ). Since this score is an absolute value, it indicates that, as it approaches "1", the favorableness of the musical piece X to the user A increases.

Further, while, in the embodiment described hereinabove, the taste profile PR1 regarding musical pieces is produced, according to the present invention, a different taste profile may be produced. For example, a taste profile regarding sound added to images or radio programs may be produced. Further, various taste profiles regarding sound may be produced such as a taste profile regarding sound of birds or animals.

Further, while, in the embodiment described hereinabove, the CPU 2 produces the taste profile PR1 based on the profile production program. However, according to the present invention, the production of the taste profile PR1 is not limited to this. For example, the profile production program is stored on various storage mediate such as a CD-ROM (Compact Disc-Read Only Memory), a DVD-ROM (Digital Versatile Disc-Read Only Memory) and a semiconductor memory and installed into the portable music player 1 so that the taste profile PR1 is produced based on the profile production program by the portable music player 1.

Further, while, in the embodiment described above, the taste profile production apparatus is implemented by software using the hard disk 15 serving as a storage section, the taste information collection module M2 serving as a music analysis section and the profile production module M3 as a profile production section. However, according to the present invention, the configuration of the taste profile production apparatus is not limited to this, but the storage section, music analysis section and profile production section may be configured otherwise by hardware.

The taste profile production apparatus, taste profile production method and profile production program of the present invention can be applied not only, for example, to a portable music player, but also to various electronic apparatus having a music reproduction function such as a portable telephone set, a PDA (Personal Digital Assistant), a personal computer and a computer game machine.

While preferred embodiments of the present invention has been described using specific terms, such description is for illustrative purposes only, and it is to be understood that changes and variations may be made without departing from the spirit or scope of the following claims.

## Claims

1. A taste profile production apparatus (1), comprising:
storage means (15) configured to retain one or more music data;
music analysis means (2) configured to analyze the music data using a predetermined music analysis method to classify numerical value meta data, which are successive values for a plurality of items representative of characteristics of the music data, into a plurality of classes for the individual items; and
profile production means (2) configured to take statistics of the number of the music data for the individual classes for the individual items to produce a taste profile representing a taste unique to a user of said taste profile production apparatus with regard to the musical pieces.

2. The taste profile production apparatus (1) according to claim 1,
wherein said profile production means (2) produces the taste profile using normalized values obtained by normalizing the numbers of the music data for the individual items classified in the classes.

3. The taste profile production apparatus (1) according to claim 1,
wherein, when said profile production means (2) produces the taste profile, said profile production means adds or subtracts predetermined values corresponding to predetermined flags applied to the individual music data to or from the numbers of the music data classified in the individual classes.

4. The taste profile production apparatus (1) according to claim 1, 2 or 3, further comprising:
communication means (18) configured to transmit a taste profile to and from an opposite party terminal; and
similarity degree calculation means (2) configured to compare the taste profile received from the opposite party terminal and the taste profile of said taste profile production apparatus itself produced by said profile production means with each other for the individual items to determine the similarity degree of tastes of the user of said taste profile production apparatus and a user of the opposite party terminal.

5. The taste profile production apparatus (1) according to claim 4,
wherein said similarity degree calculation means (2) uses normalized values obtained by normalizing the numbers of the music data for the individual items of the taste profiles classified in the classes to calculate absolute values of the differences of the normalized values for the individual items and determines the similarity degree of the tastes based on the sum total of the absolute values.

6. The taste profile production apparatus (1) according to claim 5, further comprising:
sorting means (2) configured to add the normalized values for the individual items of the music data to calculate score of the music data and sorts the music data based on the values of the score.

7. The taste profile production apparatus (1) according to one of the claims 1 to 6,
wherein said profile production means (2) calculates average values for the individual items between a taste profile received from an opposite party terminal through communication means, which transmits and receives a taste profile to and from the opposite party terminal, and the taste profile of said taste profile production apparatus itself produced by said profile production means to produce a new taste profile in which tastes of the user of said taste profile production apparatus and a user of the opposite party terminal are merged.

8. A taste profile production method, comprising the steps of:
analyzing one or more music data retained in storage means using a predetermined music analysis method to classify numerical value meta data, which are successive values for a plurality of items representative of characteristics of the music data, into a plurality of classes for the individual items; and
taking statistics of the number of the music data classified in the individual classes for the individual items to produce a taste profile representing a taste unique to a user with regard to the musical pieces.

9. A profile production program for causing an information processing apparatus to execute the steps of:
analyzing one or more music data retained in a storage means using a predetermined music analysis method to classify numerical value meta data, which are successive values for a plurality of items representative of characteristics of the music data, into a plurality of classes for the individual items; and
taking statistics of the number of the music data classified in the individual classes for the individual items to produce a taste profile representing a taste unique to a user with regard to the musical pieces.
